# FASCICULE DE BREVET EUROPEEN

(11) **EP 4 240 952 B1**
(45) Date de publication et mention de la délivrance du brevet: **27.11.2024**
(21) Numéro de dépôt: 21801531.1
(22) Date de dépôt: 28.10.2021
(51) Int. Cl.: F02C 9/00, G05B 23/02

(54) **PROCÉDÉ DE DÉTERMINATION DE DÉFAUT D'UN RENDEMENT D'UN MODULE D'UN TURBOMOTEUR D'UN AÉRONEF**
VERFAHREN ZUR BESTIMMUNG EINES EFFIZIENZFEHLERS EINES FLUGZEUGTURBOWELLENMOTORMODULS
METHOD FOR DETERMINING AN EFFICIENCY FAULT OF AN AIRCRAFT TURBOSHAFT ENGINE MODULE

(30) Priorité: 03.11.2020 FR 2011242
(43) Date de publication de la demande: 13.09.2023
(73) Titulaire: SAFRAN, 75015 Paris (FR); Safran Helicopter Engines, 64510 Bordes (FR)
(72) Inventeur: RAZAKARIVONY, Sébastien Philippe, 77550 MOISSY-CRAMAYEL (FR); FAVRE, Christophe, 77550 MOISSY-CRAMAYEL (FR); JOSEPH, Julien, 77550 MOISSY-CRAMAYEL (FR); LAMOUROUX, Jean, 77550 MOISSY-CRAMAYEL (FR)
(74) Mandataire: Argyma
(86) Numéro de dépôt international: PCT/EP2021/079926
(87) Numéro de publication internationale: WO 2022/096354

(56) Documents cités:
- EP-A1- 2 699 778
- EP-A1- 2 905 666
- EP-B1- 2 699 778
- US-A1- 2004 024 516

## Description

### Domaine technique

La présente invention concerne le domaine de la détermination de défaut d'un turbomoteur d'aéronef.

Dans l'art antérieur, il est connu d'enregistrer les données de vol d'un turbomoteur (température, pression, vitesse de rotation, etc.) et de les comparer à une base de données afin d'en déterminer les potentiels défauts. De manière connue, la base de données comporte des données de vol associées à des défauts. Cette base de données est construite à partir de détections de défauts passés lors de vols réels ou à partir de données théoriques obtenues par simulations de défauts théoriques.

La détermination d'un défaut d'un turbomoteur dépend de la qualité des données de vol mais également de la pertinence de la base de données. En pratique, une telle comparaison est complexe et des diagnostics différents, peu précis, peuvent correspondre à des données similaires. En particulier, pour un turbomoteur comportant plusieurs modules (module compresseur basse pression, module compresseur haute pression, chambre de combustion, module de turbine haute pression et module de turbine basse pression), le procédé ne permet pas de déterminer de manière précise le module qui est défectueux ainsi que la cause du défaut.

Une solution pour gagner en précision serait d'intégrer des capteurs dans tous les modules du turbomoteur afin de pouvoir caractériser de manière indépendante chacun des modules. Une telle solution est envisageable pour réaliser des tests sur banc mais n'est pas possible sur le plan industriel. Tout d'abord, la mise en place de tels capteurs est longue et complexe. Surtout, de tels capteurs sont placés dans des environnements critiques (température élevée et pression élevée), et possèdent donc un coût élevé ou sont trop fragiles. Le document EP2905666 A1 divulgue un procédé pour déterminer une valeur d'écart d'un paramètre de santé d'un composant d'une turbine à gaz.

Un des objectifs de la présente demande de brevet est de pouvoir déterminer de manière précise l'état de chaque module d'un turbomoteur sans nécessiter d'ajouter des capteurs supplémentaires dans les modules du turbomoteur.

### PRESENTATION DE L'INVENTION

L'invention concerne un procédé de détermination d'un défaut de rendement d'au moins un module d'un turbomoteur d'un aéronef, le turbomoteur comprenant au moins un module de compresseur, au moins un module de chambre de combustion et au moins un module de turbine, chaque module ayant un rendement qui lui est propre, le procédé de détermination comprenant :
- Une étape de détermination d'une cartographie de performance du turbomoteur, ci-après « cartographie réelle estimée», la cartographie réelle estimée définissant une pluralité de relations mathématiques entre des paramètres du turbomoteur, chaque relation mathématique étant déterminée à partir des mesures de paramètres du turbomoteur acquises au cours d'un vol donné de l'aéronef,
- Une étape de détermination d'indicateurs réels à partir de la cartographie réelle, lesdits indicateurs réels correspondants à des singularités de fonctionnement du turbomoteur prédéterminé,
- Une étape de détermination d'une pluralité de cartographies de performance à partir d'une simulation d'un modèle théorique du turbomoteur pour des configurations de rendement différentes, ci-après « cartographies simulées », la configuration de rendement déterminant le rendement de chaque module,
- Une étape de détermination d'indicateurs simulés pour chaque cartographie simulée, lesdits indicateurs simulés correspondants à des singularités de fonctionnement du turbomoteur prédéterminé,
- Une étape d'apprentissage d'un modèle mathématique par mise en relation des indicateurs simulés à des configurations de rendement et
- Une étape d'application dudit modèle mathématique aux indicateurs réels de manière à en déduire une configuration de rendement réelle.

Grâce à l'invention, on définit à partir de quelques mesures de paramètre au cours d'un vol donné une cartographie réelle estimée du turbomoteur qui permet avantageusement de calculer des indicateurs réels qui sont pertinents et simples à calculer.

Grâce au modèle théorique du turbomoteur, on arrive à former un modèle mathématique qui est pertinent et peut être appliqué directement sur les indicateurs réels pour déterminer la configuration de rendement du turbomoteur, c'est-à-dire l'évolution du rendement local de chaque module du turbomoteur. De manière avantageuse, le modèle mathématique peut être déterminé de manière débarquée en traitant un volume de données important. Un défaut de rendement d'un ou plusieurs modules peut être déterminé peu de temps après le vol par analyse des mesures obtenues lors du vol. De manière très avantageuse, il n'est pas nécessaire d'augmenter le nombre de capteurs dans le turbomoteur.

Par rendement, on entend un paramètre qui affecte la performance, que ce soit effectivement un rendement, un débit, ou autre. Par configuration de rendement, on entend des valeurs de rendements, et ou des écarts à des rendements de référence.

De préférence, au cours de l'étape de détermination, les indicateurs réels sont déterminés par comparaison de la cartographie réelle à une cartographie de référence. Ainsi, les indicateurs réels permettent de mettre en exergue tout écart par rapport à une situation antérieure, par exemple, une évolution de rendement.

De manière préférée, le modèle mathématique est un modèle de classification ou de régression.

De manière préférée, la cartographie de référence est obtenue à partir de la simulation d'un modèle théorique du turbomoteur pour lequel le rendement de chaque module est parfait. Ainsi, tout écart avec un rendement parfait d'un module est mis en avant dans l'indicateur réel.

De préférence, on réalise une sous-étape de correction et une sous-étape de filtrage sur les mesures de paramètre du turbomoteur au cours de l'étape de détermination de la cartographie réelle. Ainsi, on forme des relations mathématiques pertinentes dénuées de biais et sans prendre en compte les mesures marginales.

De manière préférée, chaque relation mathématique est obtenue par apprentissage par ordinateur à partir des mesures de paramètre du turbomoteur acquises au cours d'un vol donné de l'aéronef. Un apprentissage par ordinateur est plus performant qu'un apprentissage statistique.

De préférence, chaque relation mathématique est obtenue par apprentissage par ordinateur à partir de plusieurs modèles afin de déterminer la relation mathématique la plus pertinente pour lesdits paramètres, la meilleure relation mathématique étant obtenue à partir des scores de régression ou de classification. Une détermination par analyse de scores permet de déterminer de manière rapide et répétable le meilleur modèle pour chacune des relations.

De manière préférée, chaque relation mathématique est obtenue par apprentissage par ordinateur à partir d'une partie des mesures de paramètre du turbomoteur acquises au cours d'un vol donné de l'aéronef, une autre partie des mesures de paramètre étant utilisée pour valider la relation mathématique obtenue. Une telle séparation des mesures pour déterminer le modèle et le valider permet d'éviter de multiplier le nombre de données nécessaires.

L'invention concerne également un programme d'ordinateur comprenant des instructions pour l'exécution des étapes d'un procédé de détermination d'un défaut de rendement tel que présenté précédemment lorsque ledit programme est exécuté par un ordinateur. L'invention vise aussi un support d'enregistrement dudit programme d'ordinateur. Le support d'enregistrement mentionné ci-avant peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig.1] La [Fig.1] est une représentation schématique d'un aéronef sur lequel est monté un turbomoteur ;
[Fig.2] La [Fig.2] est une représentation schématique des modules d'un turbomoteur
[Fig.3] La [Fig.3] est une représentation schématique d'une étape de détermination d'une cartographie réelle estimée et d'une étape de détermination d'indicateurs réels ;
[Fig.4] La [Fig.4] est une représentation schématique de mesures de paramètre obtenues au cours d'un vol donné de l'aéronef ;
[Fig.5] La [Fig.5] est une représentation schématique des sous étapes pour la détermination d'une cartographie réelle ;
[Fig.6] La [Fig.6] est une représentation schématique de plusieurs relations mathématiques formant une cartographie réelle ;
[Fig.7] La [Fig.7] est une représentation schématique d'une cartographie de référence à partir de modèle théorique du turbomoteur avec un rendement parfait ;
[Fig.8] La [Fig.8] est une représentation schématique de la détermination et de l'utilisation d'un modèle mathématique.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

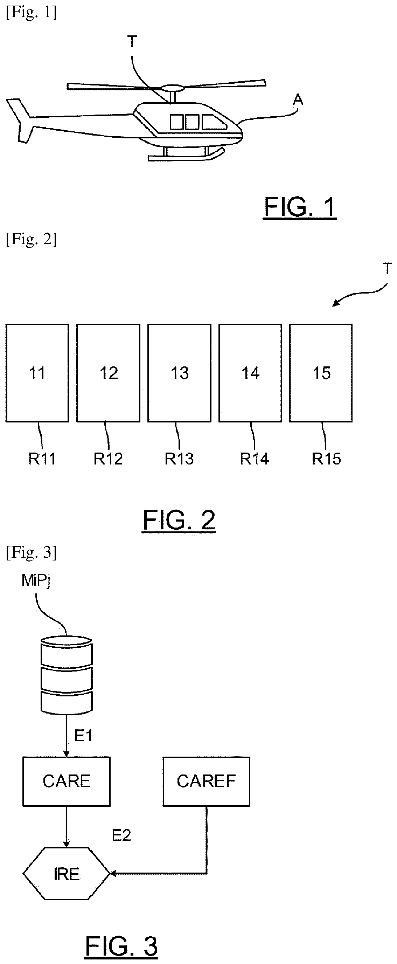

L'invention concerne un procédé de détermination d'une évolution de rendement d'un module d'un turbomoteur d'un aéronef. A titre d'exemple, il est représenté à la [Fig.1] un aéronef A (hélicoptère) comportant un turbomoteur T. Comme illustré à la [Fig.2], le turbomoteur T comporte plusieurs modules, en particulier, un module de compresseur basse pression 11, un module de compresseur haute pression 12, un module de chambre de combustion 13, un module de turbine haute pression 14 et un module de turbine basse pression 15. Il va de soi que le nombre et la nature des modules 11-15 pourraient être différents en fonction du turbomoteur concerné T.

Chaque module 11-15 possède un rendement R11-R15 qui lui est propre. Le rendement R11-R15 d'un module 11-15 correspond au rapport entre sa performance réelle et sa performance théorique de 100%. Une variation du rendement R11-R15 est un signe d'un défaut dans ledit module 11-15. Selon un aspect de l'invention, une variation de rendement correspond à une variation de débit. Aussi, lorsque les performances d'un turbomoteur T baissent, il est important de déterminer à quel ou auxquels modules 11-15 cette baisse de performance peut être attribuée.

En référence à la [Fig.3], il va être présenté tout d'abord une étape de détermination E1 d'une cartographie de performance du turbomoteur T, ci-après « cartographie réelle estimée » CARE. La cartographie réelle estimée CARE est obtenue par apprentissage par ordinateur à partir des mesures de paramètres MiPj acquises au cours d'un vol donné de l'aéronef A. Comme cela sera présenté par la suite, la cartographie réelle estimée CARE permet de mettre en relation un paramètre Pj du turbomoteur T avec au moins un autre paramètre Pk du turbomoteur T, les paramètres Pj, Pk étant liés par un modèle déterminé par apprentissage par ordinateur.

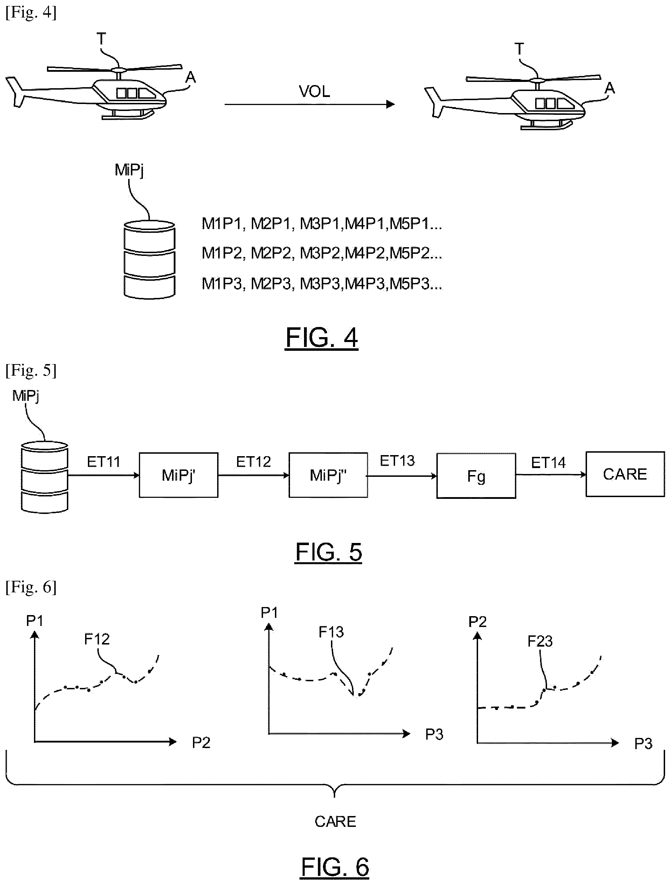

En pratique, en référence à la [Fig.4], pour ledit vol donné VOL, on réalise des mesures de paramètres MiPj du turbomoteur T de manière continue ou périodique. Les mesures sont réalisées à partir de capteurs positionnés dans et au voisinage du turbomoteur T. De manière préférée, les capteurs sont peu nombreux et il n'est pas nécessaire d'ajouter des capteurs supplémentaires par comparaison à un turbomoteur traditionnel.

En référence à la [Fig.4], les mesures MiPj peuvent comprendre notamment des mesures de température, des mesures de pression, des mesures de vitesse, des mesures de couple ou autre. De préférence, des mesures des paramètres de l'environnement du turbomoteur T sont également réalisées, en particulier, de la température extérieure et la pression extérieure. En référence à la [Fig.4], des mesures sont obtenues pour trois paramètres P1, P2, P3.

De manière préférée, comme illustré à la [Fig.5], les mesures MiPj sont corrigées au cours d'une sous-étape de correction ET11 afin de les ramener à des conditions ambiantes comparables (conditions de référence ISA sol). A titre d'exemple, les mesures MiPj sont converties en mesures corrigées MiPj' afin de tenir compte de la température extérieure. De manière préférée encore, les mesures corrigées MiPj' sont ensuite filtrées au cours d'une sous-étape de filtrage ET12 par comparaison à certaines mesures minimales ou maximales ou à des conditions de fonctionnement (mesures en vol). La sous-étape de correction ET11 et la sous-étape de filtrage ET12 sont des sous-étapes optionnelles qui permettent de mettre en avant la pertinence des mesures pour l'établissement des cartographies réelles estimées CARE.

Grâce à l'ensemble des mesures MiPj, MiPj', MiPj", on apprend, au cours d'une sous-étape d'apprentissage ET13, au moins une relation mathématique Fg entre les différents paramètres Pj, Pk. De manière préférée, les relations Fg entre les paramètres Pj, Pk du turbomoteur T sont apprises par apprentissage par ordinateur à partir de mesures corrélées temporellement MiPj, MiPj', MiPj". De manière préférée, la relation mathématique Fg est apprise par apprentissage par ordinateur à partir de plusieurs modèles afin de déterminer la relation mathématique la plus pertinente pour lesdits paramètres Pj, Pk. De manière préférée, la meilleure relation mathématique est obtenue à partir des scores de régression ou de classification. De manière préférée, seule une partie des mesures de vol est utilisée pour déterminer la relation mathématique Fg liant les paramètres Pj, Pk et une autre partie des mesures de vol est utilisée pour valider la relation mathématique Fg.

Par relation mathématique Fg entre des paramètres Pj, Pk, on entend par exemple une température interne en fonction d'une vitesse de rotation, d'un couple en fonction d'une température, ou n'importe quelle autre relation thermodynamique. La redondance de ces mises en relation permet une exploitation robuste des résultats. Dans cet exemple, en référence à la [Fig.6], il est représenté des relations mathématiques F12, F13, F23 entre les paramètres P1, P2 et P3. Les relations mathématiques apprises Fg permettent de former une cartographie réelle estimée CARE du turbomoteur T pour le vol donné VOL de l'aéronef A. Cette cartographie réelle estimée CARE permet de décrire le comportement du turbomoteur T au cours du vol donné VOL. De manière avantageuse, du fait des apprentissages successifs, on modélise mathématiquement le turbomoteur T à partir des mesures obtenues par des capteurs existants.

De manière alternative, les relations mathématiques Fg de la cartographie réelle CARE peut être déterminée de manière statistique. Par exemple, on conditionne les mesures MiPj de manière analogue, on détermine leur distribution et on sélectionne le mode principal de cette distribution (qui correspond à la relation mathématique recherchée).

A titre d'exemple, on réalise des mesures d'un paramètre de température de sortie de la turbine haute pression T45 et d'un paramètre de régime de rotation du générateur de gaz N1 en continue au cours du fonctionnement du turbomoteur T. Dans cet exemple, les paramètres de l'environnement sont aussi mesurés cours du fonctionnement du turbomoteur T, en particulier, la température extérieure T0 et/ou la pression extérieure.

Les mesures des paramètres T45 et N1 sont corrigées au sens thermodynamique en fonction des paramètres de l'environnement, en particulier, de la température extérieure T0 afin d'obtenir des mesures corrigées T45', N1' déterminées selon les fonctions suivantes :
- N1' = N1/sqrt(T0/T0ref)
- T45' = T45/T0*T0ref dans laquelle T0ref correspond à la une température de référence (ISA sol)

Les mesures corrigées T45', N1' sont ensuite filtrées pour ne conserver que les mesures corrigées les plus pertinentes, ci-après, mesures filtrées T45", N1". En pratique, les mesures corrigées T45', N1' sont comparées à des seuils prédéterminés (seuils maximaux et/ou minimaux) afin de s'assurer que les mesures corrigées T45', N1' correspondent à des états ou la demande de puissance du turbomoteur est suffisamment élevée. Autrement dit, les mesures marginales sont retirées au profit des mesures les plus pertinentes. La relation entre les mesures filtrées T45", N1" est ensuite apprise par apprentissage par ordinateur. Plusieurs relations mathématiques sont apprises Fg pour former la cartographie réelle estimée CARE.

La cartographie réelle estimée CARE est l'image réelle estimée du turbomoteur T au cours dudit vol de l'aéronef sur la plage de fonctionnement du turbomoteur T à partir d'une pluralité de mesures MiPj obtenues à des instants différents. De manière avantageuse, à chaque vol VOL de l'aéronef A, la cartographie réelle estimée CARE du turbomoteur T est mise à jour.

En référence de nouveau à la [Fig.3], le procédé comporte ensuite une étape de détermination E2 d'indicateurs réels IRE à partir de la cartographie réelle estimée CARE et d'une cartographie de référence CAREF.

Les indicateurs réels IRE sont destinés à mettre en évidence un changement dans les rendements des modules du turbomoteur T par comparaison entre une cartographie réelle estimée CARE et une cartographie de référence CAREF. Un indicateur réel IRE peut par exemple se présenter comme un maximum de différences entre les relations mathématiques Fg de deux cartographies CARE, CAREF, des statistiques génériques de ces différences, des barycentres des pentes de courbes, etc. Les indicateurs réels IRE peuvent être de natures différentes et sont déterminés pour traduire une singularité caractéristique d'une baisse de rendement. A titre d'exemple, certains indicateurs réels IRE sont configurés pour mettre en exergue un défaut d'un module de compresseur 11, 12 ou d'un module de turbine 14, 15. Les indicateurs réels IRE correspondent à un ensemble de singularités définies de manière mathématique.

La cartographie de référence CAREF peut être obtenue de diverses manières. En particulier, la cartographie de référence CAREF peut être une cartographie moyenne d'un turbomoteur T, une cartographie construite à partir d'un vol précédent ou une cartographie simulée.

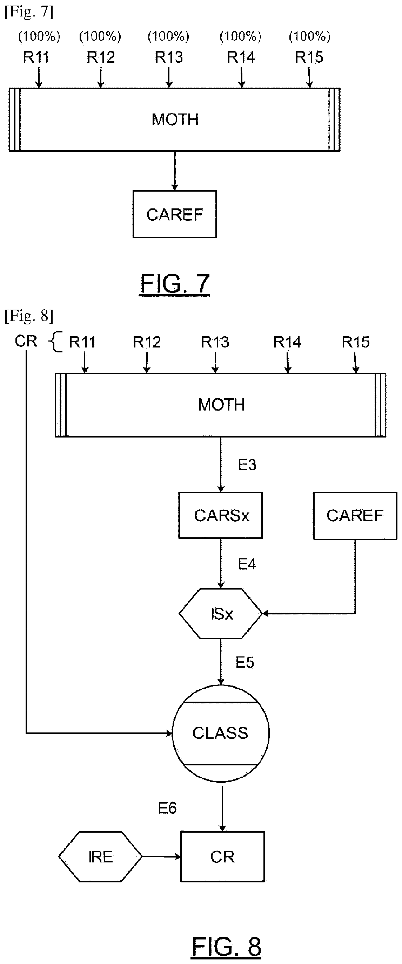

Dans le cas présent, en référence à la [Fig.7], la cartographie de référence CAREF est obtenue à partir d'un modèle théorique MOTH du turbomoteur T, c'est-à-dire, défini à partir d'une pluralité d'équations mathématiques et/ou thermodynamiques. Un tel modèle théorique MOTH est connu de l'homme du métier. La cartographie de référence CAREF ne s'appuie pas sur des mesures physiques réalisées sur un turbomoteur réel T. De manière préférée, la cartographie de référence CAREF s'appuie sur un modèle théorique MOTH du turbomoteur dont les rendements R11-R15 des modules 11-15 sont parfaits (100%). La cartographie de référence CAREF est obtenue par simulation théorique en faisant varier les entrées du modèle théorique MOTH pour obtenir différentes sorties. De manière analogue à précédemment, on peut obtenir des relations mathématiques entre les entrées/sorties des paramètres Pj, Pk et en déduire une cartographie de référence CAREF.

De manière préférée, la cartographie réelle estimée CARE et la cartographie de référence CAREF comporte les mêmes relations mathématiques Fg qui peuvent être ainsi facilement comparées pour former des indicateurs réels IRE mettant en exergue des défauts de rendement locaux.

Afin de pouvoir détecter un défaut de rendement d'un module du turbomoteur T, en référence à la [Fig.8], le procédé comporte une étape d'estimation E3 d'une modification de rendement à partir d'un modèle mathématique CLASS appliqué aux indicateurs réels IRE. Grâce à l'étape d'estimation E3, on peut déterminer l'évolution du rendement R11-R15 de chaque module 11-15 du turbomoteur T et ainsi déterminer lequel des modules 11-15 est défectueux.

La pertinence du modèle mathématique CLASS est importante afin d'obtenir une estimation précise et pertinente du rendement R11-R15 de chaque module 11-15. Pour obtenir le modèle mathématique CLASS, on détermine tout d'abord une pluralité de cartographies de performance simulées CARSx comme illustré à la [Fig.8].

Chaque cartographie simulée CARSx est obtenue à partir du modèle théorique MOTH du turbomoteur T, c'est-à-dire, défini à partir d'une pluralité d'équations mathématiques et/ou thermodynamiques pour laquelle le modèle théorique MOTH est paramétré avec différentes configurations de rendement CR. A titre d'exemple, une première configuration de rendement CR1 peut indiquer que le module de compresseur basse pression 11 a un rendement de 50% alors que les autres modules 12-15 ont un rendement de 100%. De même, une autre configuration de rendement CR2 peut indiquer que tous les modules 11-15 ont un rendement de 80%. Ainsi, les cartographies simulées CARSx couvrent de très nombreuses configurations de rendement CR. Les cartographies simulées CARSx sont ainsi l'image de tous les degrés de dégradation du rendement des différents modules 11-15 du turbomoteur T.

Le procédé comporte ensuite une étape de détermination E4 d'indicateurs simulés ISx à partir des cartographies simulées CARSx et d'une cartographie de référence CAREF. De manière préférée, les indicateurs simulés ISx sont obtenus de manière analogue aux indicateurs réels IRE, chaque cartographie simulée CARSx étant utilisée en lieu et place de la cartographie réelle estimée CARE. Les indicateurs simulés ISx sont ainsi des représentants élémentaires de chaque configuration de rendement CR du modèle théorique MTH du turbomoteur T. La même cartographie de référence CAREF est de préférence utilisée mais il va de soi qu'elle pourrait être différente.

Au cours d'une étape d'apprentissage E5, le modèle mathématique CLASS est appris par mise en relation des indicateurs simulés ISx à des configurations de rendement CR. De manière préférée, le modèle mathématique CLASS permet d'attribuer à chaque indicateur simulé ISx une configuration de rendement CR et, par conséquent, une perte de rendement pour chaque module 11-15 (classification), ou une valeur de perte de rendement (régression), ou des écarts à des rendements de référence (régression). Il est ainsi possible de déterminer le signe de l'évolution de rendement (perte ou gain) et, de préférence, la valeur de ladite évolution. Par analyse des indicateurs simulés ISx, on peut ainsi déterminer l'évolution individuelle du rendement de chaque module 11-15 du turbomoteur T. Chaque configuration de rendement CR correspond dans cet exemple à un rendement en pourcentage mais il va de soi qu'elle pourrait correspondre à une évolution (positive ou négative) ou à un écart de rendement par rapport à un rendement de référence (parfait ou antérieur).

Le modèle mathématique CLASS est obtenu, de préférence, par un opérateur de régression, par un opérateur de classification, par forêt aléatoire, vecteurs support, plus proches voisins, etc. De manière avantageuse, le modèle mathématique CLASS peut être obtenu grâce à des moyens de calculs performants afin d'obtenir une grande variété de configurations de rendement CR, c'est-à-dire, une précision dans la nature du défaut. Le même modèle mathématique CLASS peut être utilisé de manière avantageuse pour de nombreux vols pour les turbomoteurs du même type.

En référence à la [Fig.8], le modèle mathématique CLASS étant obtenu, le procédé comporte une étape d'application E6 dudit modèle mathématique CLASS aux indicateurs réels IRE de manière à en déduire une configuration de rendement réelle. L'utilisation du modèle mathématique CLASS requiert une puissance informatique modeste, ce qui permet de déterminer un défaut de rendement de manière réactive après chaque vol donné VOL.

A titre d'exemple, dans le cas d'un opérateur de classification, le modèle mathématique CLASS apprend la relation *δ* = *f* (1), où *I* sont les indicateurs, et *δ* est un vecteur dont les composantes *m* correspondant aux modules valent + 1 si le rendement du module *m* a augmenté par rapport à la référence, ou - 1 s'il a diminué. Dans le cas d'un opérateur par régression, la relation apprise est *ε* = *f* (*I*), où *I* sont les indicateurs et *ε* est un vecteur dont les composantes *m* correspondant aux modules valent *ηₘ, _{ref}* - *η_{m, courant},* où *ηₘ* est le rendement du module *m*, soit à l'état de référence (*η*_{*m*, *ref*}) soit à l'état courant (*η_{m, courant}*).

A chaque nouveau vol VOL, lorsque de nouvelles données de vol sont disponibles, une nouvelle cartographie réelle estimée CARE est réalisée avec de nouveaux indicateurs réels IRE. Par application du modèle mathématique CLASS sur les nouveaux indicateurs réels IRE, on en déduit avantageusement une évolution de rendement de chaque module 11-15 du turbomoteur T. L'état de santé de chaque module 11-15 est ainsi connu ce qui permet de réaliser une maintenance adaptée, en particulier, prédictive.

De manière préférée, le procédé comporte une étape de suivi des rendements R11-R15 de chaque module 11-15 et de détermination d'un défaut si au moins un des rendements est inférieur à un seuil ou si sa pente est inférieure à un seuil. L'évolution des rendements est suivie de manière individuelle et/ou globale.

## Revendications

1. Procédé de détermination d'un défaut de rendement (R11-R15) d'au moins un module (11-15) d'un turbomoteur (T) d'un aéronef (A), le turbomoteur (T) comprenant au moins un module de compresseur (11, 12), au moins un module de chambre de combustion (13) et au moins un module de turbine (14, 15), chaque module ayant un rendement (R11-R15) qui lui est propre, le procédé de détermination comprenant :
• Une étape de détermination (E1) d'une cartographie de performance du turbomoteur (T), ci-après « cartographie réelle estimée» (CARE), la cartographie réelle estimée (CARE) définissant une pluralité de relations mathématiques (Fg) entre des paramètres (Pj) du turbomoteur (T), chaque relation mathématique (Fg) étant déterminée à partir des mesures de paramètres (Pj) du turbomoteur (T) acquises au cours d'un vol donné (VOL) de l'aéronef (A),
• Une étape de détermination (E2) d'indicateurs réels (IRE) à partir de la cartographie réelle (CARE), lesdits indicateurs réels (IRE) correspondants à des singularités de fonctionnement du turbomoteur (T) prédéterminé,
• Une étape de détermination (E3) d'une pluralité de cartographies de performance à partir d'une simulation d'un modèle théorique (MOTH) du turbomoteur (T) pour des configurations de rendement (CR) différentes, ci-après « cartographies simulées » (CARSx), la configuration de rendement (CR) déterminant le rendement (R11-R15) de chaque module (11-15),
• Une étape de détermination (E4) d'indicateurs simulés (ISx) pour chaque cartographie simulée (CARSx), lesdits indicateurs simulés (ISx) correspondants à des singularités de fonctionnement du turbomoteur (T) prédéterminé,
• Une étape d'apprentissage (E5) d'un modèle mathématique (CLASS) par mise en relation des indicateurs simulés (ISx) à des configurations de rendement (CR) et
• Une étape d'application (E6) dudit modèle mathématique (CLASS) aux indicateurs réels (IRE) de manière à en déduire une configuration de rendement réelle (CR).

2. Procédé selon la revendication 1, dans lequel, au cours de l'étape de détermination (E2), les indicateurs réels (IRE) sont déterminés par comparaison de la cartographie réelle (CARE) à une cartographie de référence (CAREF1).

3. Procédé selon la revendication 2, dans lequel la cartographie de référence (CAREF) est obtenue à partir de la simulation d'un modèle théorique (MOTH) du turbomoteur (T) pour lequel le rendement (R11-R15) de chaque module (11-15) est parfait.

4. Procédé selon l'une des revendications 1 à 3, dans lequel, on réalise une sous-étape de correction (ET11) et une sous-étape de filtrage (ET12) sur les mesures de paramètre (Pj) du turbomoteur (T) au cours de l'étape de détermination (E1) de la cartographie réelle (CARE).

5. Procédé selon l'une des revendications 1 à 4, dans lequel, chaque relation mathématique (Fg) est obtenue par apprentissage par ordinateur à partir des mesures de paramètre (Pj) du turbomoteur (T) acquises au cours d'un vol donné (VOL) de l'aéronef (A).

6. Procédé selon la revendication 5, dans lequel, chaque relation mathématique (Fg) est obtenue par apprentissage par ordinateur à partir de plusieurs modèles afin de déterminer la relation mathématique la plus pertinente pour lesdits paramètres (Pj), la meilleure relation mathématique (Fg) étant obtenue à partir des scores de régression ou de classification.

7. Procédé selon l'une des revendications 5 à 6, dans lequel, chaque relation mathématique (Fg) est obtenue par apprentissage par ordinateur à partir d'une partie des mesures de paramètre (Pj) du turbomoteur (T) acquises au cours d'un vol donné de l'aéronef (A), une autre partie des mesures de paramètre (Pj) étant utilisée pour valider la relation mathématique (Fg) obtenue.

8. Programme d'ordinateur comprenant des instructions pour l'exécution des étapes du procédé de détermination d'un défaut de rendement selon l'une des revendications 1 à 7 lorsque ledit programme est exécuté par un ordinateur.

9. Support informatique comprenant le programme d'ordinateur selon la revendication 8.

## Patentansprüche

1. Verfahren zur Bestimmung eines Wirkungsgradfehlers (R11-R15) von mindestens einem Modul (11-15) eines Turbomotors (T) eines Luftfahrzeugs (A), wobei der Turbomotor (T) mindestens ein Kompressormodul (11, 12), mindestens ein Brennkammermodul (13) und mindestens ein Turbinenmodul (14, 15) umfasst, wobei jedes Modul einen ihm eigenen Wirkungsgrad (R11-R15) aufweist, wobei das Bestimmungsverfahren umfasst:
• einen Schritt des Bestimmens (E1) einer Leistungskartographie des Turbomotors (T), nachfolgend "geschätzte reale Kartographie" (CARE), wobei die geschätzte reale Kartographie (CARE) eine Vielzahl mathematischer Beziehungen (Fg) zwischen Parametern (Pj) des Turbomotors (T) definiert, wobei jede mathematische Beziehung (Fg) anhand von Messungen von Parametern (Pj) des Turbomotors (T) bestimmt wird, die während eines gegebenen Fluges (VOL) des Flugzeugs (A) erfasst werden,
• einen Schritt des Bestimmens (E2) realer Indikatoren (IRE) anhand der realen Kartographie (CARE), wobei die realen Indikatoren (IRE) Betriebssingularitäten des vorbestimmten Turbomotors (T) entsprechen,
• einen Schritt des Bestimmens (E3) einer Vielzahl von Leistungskartographien anhand einer Simulation eines theoretischen Modells (MOTH) des Turbomotors (T) für verschiedene Wirkungsgradkonfigurationen (CR), nachfolgend "simulierte Kartographien" (CARSx), wobei die Wirkungsgradkonfiguration (CR) den Wirkungsgrad (R11-R15) jedes Moduls (11-15) bestimmt,
• einen Schritt des Bestimmens (E4) simulierter Indikatoren (ISx) für jede simulierte Kartographie (CARSx), wobei die simulierten Indikatoren (ISx) Betriebssingularitäten der vorbestimmten Turbomotor (T) entsprechen,
• einen Schritt des Anlernens (E5) eines mathematischen Modells (CLASS) durch In-Beziehung-Setzen der simulierten Indikatoren (ISx) zu Wirkungsgradkonfigurationen (CR) und
• einen Schritt des Anwendens (E6) des mathematischen Modells (CLASS) auf die realen Indikatoren (IRE), um daraus eine reale Wirkungsgradkonfiguration (CR) abzuleiten.

2. Verfahren nach Anspruch 1, wobei während des Bestimmungsschritts (E2) die realen Indikatoren (IRE) durch Vergleich der realen Kartographie (CARE) mit einer Referenzkartographie (CAREF1) bestimmt werden.

3. Verfahren nach Anspruch 2, wobei die Referenzkartographie (CAREF) anhand der Simulation eines theoretischen Modells (MOTH) des Turbomotors (T) erhalten wird, wofür der Wirkungsgrad (R11-R15) jedes Moduls (11-15) perfekt ist.

4. Verfahren nach einem der Ansprüche 1 bis 3, wobei ein Korrekturunterschritt (ET11) und ein Filterunterschritt (ET12) an den Parametermessungen (Pj) des Turbomotors (T) während des Bestimmungsschritts (E1) der realen Kartographie (CARE) durchgeführt werden.

5. Verfahren nach einem der Ansprüche 1 bis 4, wobei jede mathematische Beziehung (Fg) durch rechnergesteuertes Lernen anhand der Parametermessungen (Pj) des Turbomotors (T) erhalten wird, die während eines gegebenen Fluges (VOL) des Luftfahrzeugs (A) erfasst werden.

6. Verfahren nach Anspruch 5, wobei jede mathematische Beziehung (Fg) durch rechnergesteuertes Lernen anhand mehrerer Modelle erhalten wird, um die relevanteste mathematische Beziehung für die Parameter (Pj) zu bestimmen, wobei die beste mathematische Beziehung (Fg) anhand der Regressions- oder Klassifizierungsergebnisse gewonnen wird.

7. Verfahren nach einem der Ansprüche 5 bis 6, wobei jede mathematische Beziehung (Fg) durch rechnergesteuertes Lernen anhand eines Teils der Parametermessungen (Pj) des Turbomotors (T) erhalten wird, die während eines gegebenen Fluges des Luftfahrzeugs (A) erfasst wurden, wobei ein anderer Teil der Parametermessungen (Pj) verwendet wird, um die erhaltene mathematische Beziehung (Fg) zu validieren.

8. Rechnerprogramm, das Anweisungen zur Ausführung der Schritte des Verfahrens zur Bestimmung eines Wirkungsgradfehlers nach einem der Ansprüche 1 bis 7 umfasst, wenn das Programm von einem Rechner ausgeführt wird.

9. IT-Medium, das das Rechnerprogramm nach Anspruch 8 umfasst.

## Claims

1. Method for determining an efficiency fault (R11-R15) of at least one module (11-15) of a turboshaft engine (T) of an aircraft (A), the turboshaft engine (T) comprising at least one compressor module (11, 12), at least one combustion chamber module (13) and at least one turbine module (14, 15), each module having an efficiency (R11-R15) that is specific to it, the method of determining comprising:
- A step of determining (E1) a performance mapping of the turboshaft engine (T), hereinafter "estimated real mapping" (CARE), the estimated real mapping (CARE) defining a plurality of mathematical relationships (Fg) between parameters (Pj) of the turboshaft engine (T), each mathematical relationship (Fg) being determined from the measurements of parameters (Pj) of the turboshaft engine (T) acquired during a given flight (VOL) of the aircraft (A),
- A step of determining (E2) real indicators (IRE) from the real mapping (CARE), said real indicators (IRE) corresponding to operating singularities of the predetermined turboshaft engine (T),
- A step of determining (E3) a plurality of performance mappings from a simulation of a theoretical model (MOTH) of the turboshaft engine (T) for different efficiency configurations (CR), hereinafter "simulated mappings" (CARSx), the efficiency configuration (CR) determining the efficiency (R11-R15) of each module (11-15),
- A step of determining (E4) simulated indicators (lSx) for each simulated mapping (CARSx), said simulated indicators (ISx) corresponding to operating singularities of the predetermined turboshaft engine (T),
- A training step (E5) of a mathematical model (CLASS) by linking simulated indicators (lSx) to efficiency configurations (CR) and
- An application step (E6) of said mathematical model (CLASS) to the real indicators (IRE) in order to deduce a real efficiency configuration (CR).

2. Method according to claim 1, wherein, during the step of determining (E2), the real indicators (IRE) are determined by comparing the real mapping (CARE) to a reference mapping (CAREF1).

3. Method according to claim 2, wherein the reference mapping (CAREF) is obtained from the simulation of a theoretical model (MOTH) of the turboshaft engine (T) for which the efficiency (R11-R15) of each module (11-15) is perfect.

4. Method according to one of claims 1 to 3, wherein a correction sub-step (ET11) and a filtering sub-step (ET12) are performed on the parameter measurements (Pj) of the turboshaft engine (T) during the step of determining (E1) the real mapping (CARE).

5. Method according to one of claims 1 to 4, wherein each mathematical relationship (Fg) is obtained by computer training from the parameter measurements (Pj) of the turboshaft engine (T) acquired during a given flight (VOL) of the aircraft (A).

6. Method according to claim 5, wherein each mathematical relationship (Fg) is obtained by computer training from several models in order to determine the most relevant mathematical relationship for said parameters (Pj), the best mathematical relationship (Fg) being obtained from regression or classification scores.

7. Method according to one of claims 5 to 6, wherein each mathematical relationship (Fg) is obtained by computer training from a portion of the parameter measurements (Pj) of the turboshaft engine (T) acquired during a given flight of the aircraft (A), another portion of the parameter measurements (Pj) being used to validate the mathematical relationship (Fg) obtained.

8. Computer program comprising instructions for executing steps of the method for determining an efficiency fault according to one of claims 1 to 7 when said program is executed by a computer.

9. Computer medium comprising the computer program according to claim 8.
